# EUROPEAN PATENT APPLICATION

(11) **EP 2 562 634 A2**
(43) Date of publication of application: **27.02.2013**
(21) Application number: 12181172.3
(22) Date of filing: 21.08.2012
(51) Int. Cl.: G06F 3/06

(54) **Data copy processing system, storage device, and data copy processing method**

(30) Priority: 23.08.2011 JP 2011181403
(71) Applicant: FUJITSU LIMITED, Kawasaki-shi, Kanagawa 211-8588 (JP)
(72) Inventor: Uchida, Tsuyoshi, Kanagawa, 211-8588 (JP)
(74) Representative: HOFFMANN EITLE

(57) **Abstract**

A data copy processing system includes a first storage device that is a copy source and includes a first storage drive in which the data is recorded and a first controller that controls the first storage drive, and a second storage device that is a copy destination and includes a second storage drive in which a copy of the data of the first storage device is written and a second controller that controls the second storage drive. The first controller performs control of instructing the first storage drive to read out all data in an order of addresses, in accordance with a read command that is issued from the second controller, and outputting the read-out data to the second storage device, and the second controller performs control of writing the read-out data in the second storage drive in a read-out order of addresses.

## Description

### FIELD

An embodiment discussed herein is related to a data copy processing system, a storage device, and a data copy processing method.

### BACKGROUND

Currently, the amount of data dealt in companies and the like has been increasing due to development of information infrastructure, and storage devices of the storage area network (SAN)/network attached storage (NAS) system have been rapidly widespread as a tool for storing important information such as customer data and ordering data.

The storage device includes a high-capacity storing device provided with a plurality of hard disk drives (HDD), and reads and writes data with respect to each of the HDDs in accordance with a request from a host system such as a server.

Such storage devices play important role in information infrastructure building of a social system or the like. Therefore, switching to higher-capacity storage devices has been performed in accordance with increase of the data amount.

However, this switching operation includes an operation of copying data recorded in a transfer source storage device to a transfer destination storage device, so that high-speed and accurate data copying is demanded. Further, a data copy processing system that enables switching of storage devices during non-stop operation is desired to be realized.

Japanese Laid-open Patent Publication No. 2006-31579 and Japanese Laid-open Patent Publication No. 2006-113927 are examples of related art.

### PROBLEMS

It is desirable to provide a data copy processing system, a storage device, and a data copy processing method that enable an execution of data copy processing of a storage device during operation.

### SUMMARY

According to an aspect of the invention, a data copy processing system includes a first storage device that is a copy source and includes a first storage drive in which the data is recorded and a first controller that controls the first storage drive and a second storage device that is a copy destination and includes a second storage drive in which a copy of the data of the first storage device is written and a second controller that controls the second storage drive. The first controller performs control of instructing the first storage drive to read out all data in an order of addresses, in accordance with a read command that is issued from the second controller, and outputting the read-out data to the second storage device, and the second controller performs control of writing the read-out data in the second storage drive in a read-out order of addresses.

### BRIEF DESCRIPTION OF DRAWINGS

FIG. 1 is a block diagram illustrating a data copy processing system;

FIGs. 2A and 2B illustrate a relationship between a virtual disk and a physical disk;

FIG. 3 is a flow diagram illustrating copy control by a copy control unit;

FIG. 4 is a flow diagram illustrating copy processing performed by a copy processing execution unit;

FIG. 5 illustrates data copy processing in the data copy processing system;

FIG. 6 is a flow diagram illustrating read/write control in a copy processing mode;

FIG. 7 illustrates read processing in the data copy processing system;

FIG. 8 is a flow diagram illustrating update processing of a second storage device;

FIG. 9 is a flow diagram illustrating determination of whether to perform update processing of an update target area; and

FIG. 10 illustrates write processing and update processing in the data copy processing system.

### DESCRIPTION OF EMBODIMENT

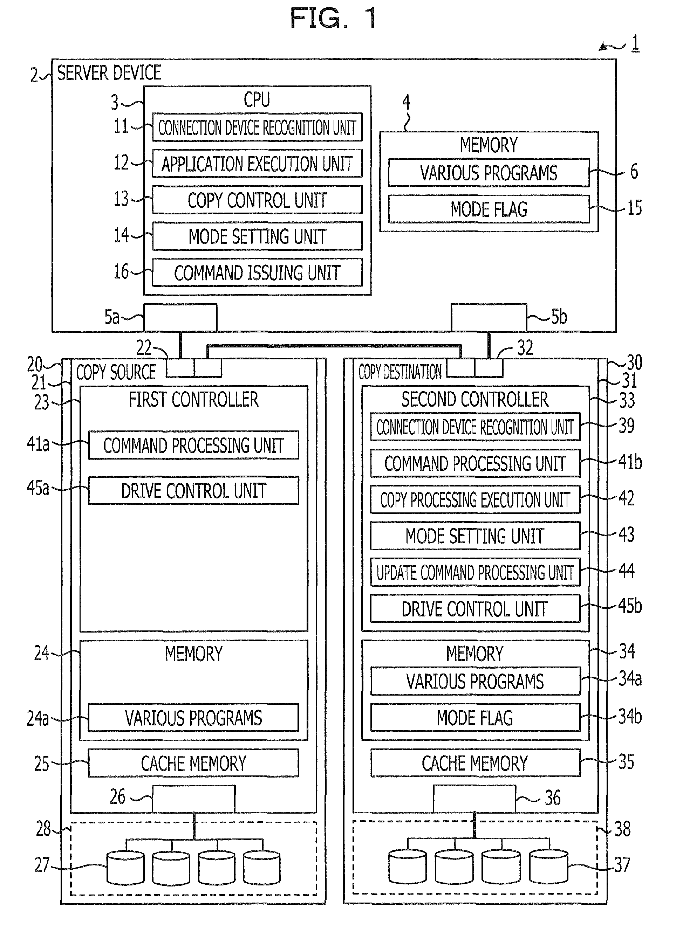

An embodiment is described in detail below in reference to the accompanying drawings. FIG. 1 is a block diagram of a data copy processing system. A data copy processing system 1 is configured such that a second storage device (copy destination) 30 is connected to computer systems of a server device 2 and a first storage device (copy source) 20.

The server device 2 is an example of a host device and includes a central processing unit (CPU) 3, a memory 4, first and second host bus adapters 5a and 5b, and the like. In the memory 4, application software and various programs 6 such as a copy control program are stored. Further, administration information such as a mode flag 15 is also stored in the memory 4.

The first and second host bus adapters 5a and 5b are hardware host interface equipment which connects the server device 2 and an external device to perform communication. An example of hardware host interface equipment is a fiber channel interface.

The CPU 3 executes various programs which are stored in the memory 4. A connection device recognition unit 11 acquires device information from an external device which is connected to the first and second host bus adapters 5a and 5b, so as to perform command issuing and data transfer which correspond to the external device. The device information is information of a type of an external device, a data transfer speed, a data transfer amount, and the like. The connection device recognition unit 11 disconnects (cuts connection with) the external device.

The CPU 3 includes an application execution unit 12 which is built by an execution of the application software which is stored in the memory 4. The application software is software for performing an operation desired to be executed on a computer by a user and is processed by the application execution unit 12.

The CPU 3 includes a copy control unit 13 which is built by an execution of the copy control program which is stored in the memory 4. The copy control program is provided to a user in a manner to be incorporated in a device driver of the storage device and is installed on the server device. A mode setting unit 14 switches a normal processing mode and a copy processing mode in response to an instruction from the copy control unit 13.

The normal processing mode is a mode to perform control corresponding to an access request with respect to the storage device. The copy processing mode is a mode to start the copy control program to execute copy control in response to a data copying (data transfer) or switching request of the storage device. Here, the server device 2 continues control corresponding to an access request with respect to the storage device even when a mode is switched to the copy processing mode.

The CPU 3 further includes a command issuing unit 16. The command issuing unit 16 issues various commands to a connected external device. The command issuing unit 16 issues a copy command instructing start of copying of data of the first storage device 20 which is the copy source, to the second storage device 30 which is the copy destination in response to an instruction from the copy control unit 13.

The first storage device 20 is a copy source storage device. The first storage device 20 includes a first controller module 21 and a first storage drive group 28 which includes a plurality of storage drives 27. The first controller module 21 includes a channel adapter 22, a first controller 23, a memory 24, a cache memory 25, and a device adapter 26.

The channel adapter 22 is hardware host interface equipment which is connected with host devices respectively via cables and communicates with the host devices. The channel adapter 22 is connected with the host bus adapter 5a of the server device 2 and a channel adapter 32 of the second storage device 30 via cables, and transmission/reception of a command and data is performed through the channel adapter 22. Accordingly, the host devices of the first storage device 20 are the sever device 2 and the second storage device 30.

The first controller 23 performs read/write control and the like with respect to the first storage drive group 28 and includes a command processing unit 41a and a drive control unit 45a. The command processing unit 41a processes a command which is received from the channel adapter 22 so as to instruct the drive control unit 45a.

The drive control unit 45a outputs a read/write request with respect to the storage drive 27 which is an access target and receives a response from a storage drive 27 which is the access target. Then, the drive control unit 45a notifies the command processing unit 41a of this response, and the command processing unit 41a outputs a completion report indicating a normal end or an abnormal report indicating an error end with respect to the host device.

The memory 24 stores various programs 24a, administration information used by the first controller 23, and the like. Here, the various programs 24a may include a copy processing program and the like, but the first controller 23 does not have to execute the copy processing program in a case where the first storage device 20 is the copy source device.

The cache memory 25 temporarily stores write data transmitted from the server device 2 and read data outputted from the first storage drive group 28. The cache memory 25 is used so as to moderate performance difference between a host interface and a device interface.

The device adapter 26 is interface equipment which connects the first controller module 21 and the plurality of storage drives 27 so as to perform communication. The first storage drive group 28 may include a solid state drive (SSD) in addition to a plurality of HDDs as storage drives.

The second storage device 30 is a copy destination storage device and is connected to the server device 2 and the first storage device 20 so as to be switched from the first storage device. The second storage device 30 similarly includes a second controller module 31 and a second storage drive group 38 which includes a plurality of storage drives 37 as well.

The second controller module 31 includes a channel adapter 32, a second controller 33, a memory 34, a cache memory 35, and a device adapter 36. The channel adapter 32 is host interface equipment which is connected with host devices respectively via cables and communicates with the host devices. The channel adapter 32 is connected with the host bus adapter 5b of the server device 2 and the channel adapter 22 of the first storage device 20 via cables, and transmission/reception of a command and data is performed through the channel adapter 32.

The second controller 33 includes a connection device recognition unit 39. The connection device recognition unit 39 acquires device information of a connection destination when an external device is connected to the channel adapter 32. The second controller 33 performs read/write control and the like with respect to the second storage drive group 38 in a normal operation mode and includes a command processing unit 41b and a drive control unit 45b.

The command processing unit 41b processes a command which is received from the channel adapter 32 so as to instruct the drive control unit 45b. The drive control unit 45b outputs a read/write request with respect to a storage drive 37 which is an access target and receives a response from the storage drive 37 which is the access target.

Then, the drive control unit 45b notifies the command processing unit 41b of this response, and the command processing unit 41b outputs a completion report indicating a normal end or an abnormal report indicating an error end with respect to the server device 2.

The second controller 33 includes a copy processing execution unit 42 and an update command processing unit 44 which are built by an execution of the copy processing program in a copy processing mode. Operations of the copy processing execution unit 42 and the update command processing unit 44 will be described in detail later.

The second controller 33 includes a mode setting unit 43. A mode setting unit 43 switches a normal processing mode and a copy processing mode in response to an instruction from the copy processing execution unit 42. The normal processing mode is a mode to perform control corresponding to an access request with respect to the second storage drive group 38 from the server device 2. The copy processing mode is a mode to start the copy processing program to execute copy processing in response to a copy command from the server device 2.

The memory 34 stores various programs 34a, a mode flag 34b, administration information used by the second controller 33, and the like. The various programs 34a include a copy processing program which will be described later. The cache memory 35 temporarily stores write data transmitted from the server device 2 and read data outputted from the second storage drive group 38.

The device adapter 36 is interface equipment which connects the second controller module 31 and the plurality of storage drives 37 so as to perform communication. The second storage drive group 38 may include a solid state drive (SSD) in addition to a plurality of HDDs as storage drives.

In order to switch the first storage device 20 to the second storage device 30 which has larger capacity than the first storage device 20, a user connects the second storage device 30 to each of the server device 2 and the first storage device 20.

When the connection device recognition unit 11 of the server device 2 recognizes connection of the second storage device 30, the connection device recognition unit 11 acquires device information from the second storage device 30. Here, the device information of the first storage device 20 has been already acquired in the connection of the first storage device 20.

The connection device recognition unit 39 of the second storage device 30 also acquires device information of the server device 2 and the first storage device 20. Subsequently, the application execution unit 12 executes a copy control program 10 in response to a data copy request (data transfer request) which is inputted by the user, so as to build the copy control unit 13. All access requests from an application of the server device 2 are performed with respect to a virtual disk. Therefore, a virtual disk is formed.

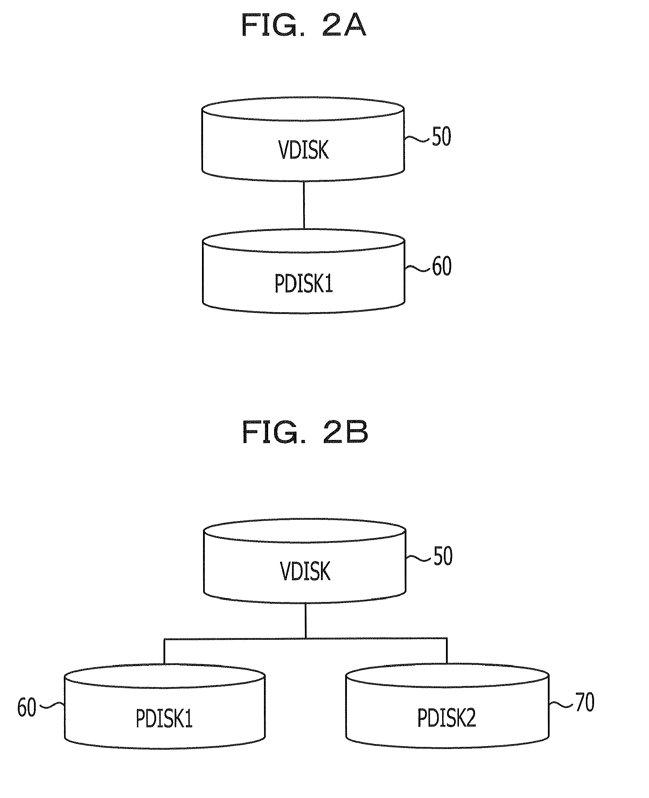

FIGs. 2A and 2B illustrate a relationship between a virtual disk and a physical disk. When the first storage device 20 is connected, the server device 2 forms a virtual disk (VDISK) 50 as depicted in FIG. 2A. Subsequently, a physical disk (PDISK1) 60 of the first storage device 20 is assigned to the virtual disk (VDISK) 50.

Then, when the second storage device 30 is connected to the server device 2 as a copy destination, a physical disk (PDISK2) 70 of the second storage device 30 is added and assigned to the virtual disk (VDISK) 50.

Specifically, the copy control unit 13 forms a combination (a parallel pair) of the physical disk (PDISK1) 60, of which a logical unit number is 0, of the first storage device 20 and the physical disk (PDISK2) 70, of which a logical unit number is 0, of the second storage device 30, so as to assign the combination to the virtual disk (VDISK) 50, as depicted in FIG. 2B.

Here, this combination may be determined on the basis of combination information which is set by a user. Thus, when the virtual disk (VDISK) 50 is accessed, the copy control unit 13 can assign the access to access to the physical disk (PDISK1) 60 and the physical disk (PDISK2) 70. That is, the copy control unit 13 can access the copy source and the copy destination.

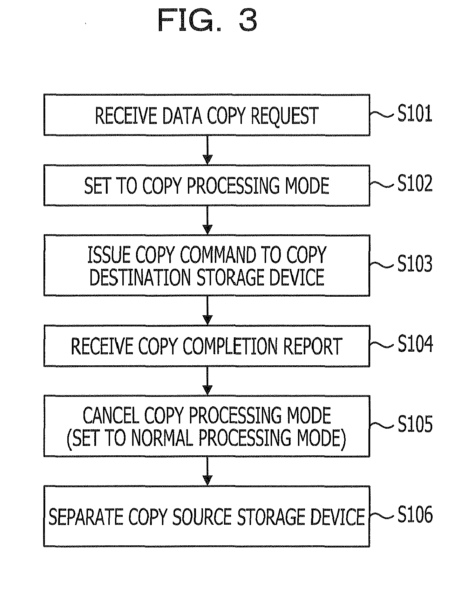

FIG. 3 is a flow diagram illustrating the copy control performed by the copy control unit. The application execution unit 12 receives a data copy request which is inputted by a user (S101). The application execution unit 12 executes the copy control program 10 which is stored in the memory 4 so as to build the copy control unit 13.

The copy control unit 13 instructs the mode setting unit 14 to switch the server device 2 into a copy processing mode and set the mode flag 15 to the copy processing mode (S102). Further, the copy control unit 13 assigns the physical disk (PDISK2) 70 of the second storage device 30 which is the copy destination to the virtual disk (VDISK) 50, as described above, so as to change access setting.

The copy control unit 13 instructs the command issuing unit 16 to issue a copy command to the second storage device 30 which is the copy destination (S103). The copy command is a command to make the second storage device 30 copy data of the first storage device 20 which is the copy source. Then, the copy processing is executed by the second storage device 30.

Then, when the copy control unit 13 receives a completion report of the copy processing, which indicates that the copy processing is completed, from the second storage device 30 (S104), the copy control unit 13 cancels the copy processing mode. Further, the copy control unit 13 instructs the mode setting unit 14 to cancel the copy processing mode of the server device 2 and set the mode flag 15 into the normal processing mode (S105).

Then, the copy control unit 13 instructs the connection device recognition unit 11 to cut off interface connection of the first storage device 20 which is the copy source. Accordingly, the first storage device 20 which is the copy source is separated from the server device 2 (S106).

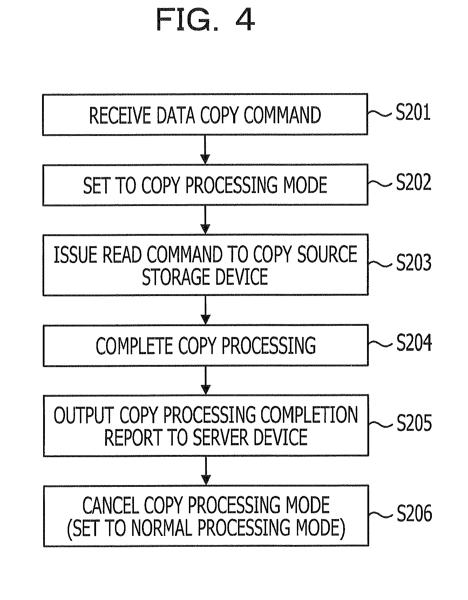

FIG. 4 is a flow diagram illustrating the copy processing performed by the copy processing execution unit. The second storage device 30 which is the copy destination receives a copy command from the server device 2 (S201). Then, the command processing unit 41b executes the copy processing program which is stored in the memory 34 in accordance with the copy command.

By the execution of the copy processing program, the copy processing execution unit 42 and the update command processing unit 44 are built in the second controller 33. Then, the copy processing execution unit 42 instructs the mode setting unit 43 to switch the second storage device 30 into the copy processing mode and set the mode flag 34b to the copy processing mode (S202).

The copy processing execution unit 42 issues a read command with respect to the first storage device 20 which is the copy source, so as to give instruction to read out all data in an order of addresses (S203). The copy processing execution unit 42 sequentially receives the read data from the first storage device 20 and temporarily stores the read data in the cache memory 35 in the read-out order of addresses. Then, the read data stored in the cache memory 35 is outputted to the second storage drive group 38 so as to be stored in each of the storage drives 37.

When copying of all data is completed through the above-described process (S204), the copy processing execution unit 42 instructs the command processing unit 41b to output a completion report of the copy processing to the server device 2 (S205). Then, the copy processing execution unit 42 instructs the mode setting unit 43 to cancel the copy processing mode of the second storage device 30 and set the mode flag 34b to the normal processing mode (S206).

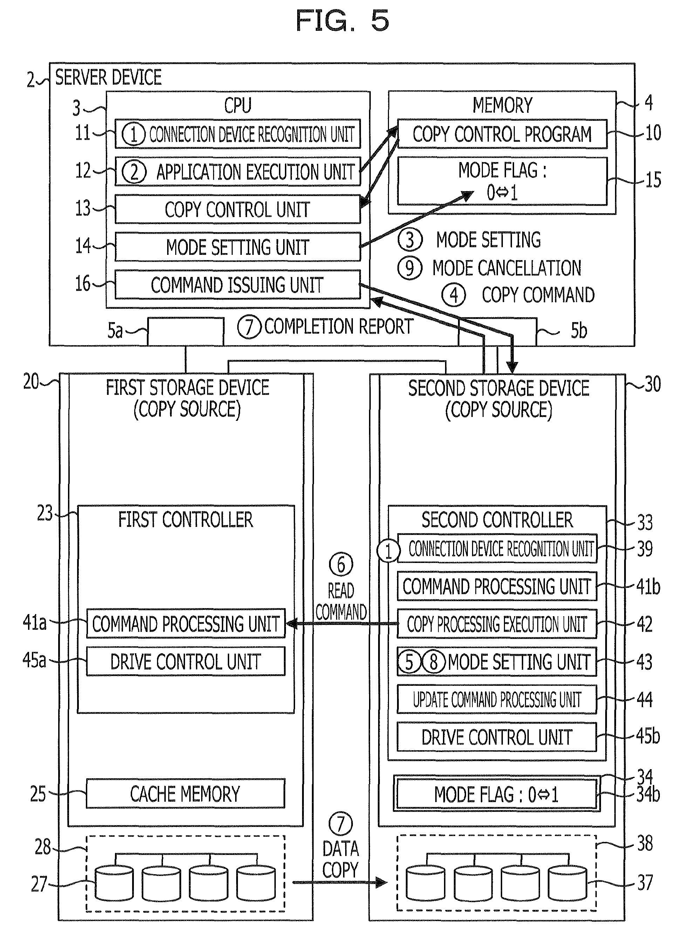

FIG. 5 illustrates the data copy processing in the data copy processing system. When the second storage device 30 is connected to the server device 2 and the first storage device 20, the connection device recognition unit 11 of the server device 2 acquires device information from the second storage device 30. The connection device recognition unit 39 of the second storage device 30 acquires device information of the server device 2 and the first storage device 20 (1).

The application execution unit 12 executes the copy control program 10 in response to a data copy request which is inputted by a user, so as to build the copy control unit 13 (2). The copy control unit 13 instructs the mode setting unit 14 to switch the server device 2 into the copy processing mode and set the mode flag 15 to 1 (copy processing mode) (3).

The copy control unit 13 changes a combination of a virtual disk and a physical disk so as to enable collective access to the copy source disk and the copy destination disk as one storage device. The copy control unit 13 instructs the command issuing unit 16 to issue a copy command to the second storage device 30 (4). When the second storage device 30 receives the copy command from the server device 2, the second storage device 30 executes the copy processing program.

The copy processing execution unit 42 built by the copy processing program instructs the mode setting unit 43 to switch the second storage device 30 into the copy processing mode and set the mode flag 34b to 1 (copy processing mode) (5).

The copy processing execution unit 42 issues a read command to the first storage device 20 which is the copy source so as to give instruction to read out all data in an order of addresses (logical block address: LBA) (6). For the instruction of the read command, the copy processing execution unit 42 preliminarily acquires device information of the first storage device 20 and issues a read command to the first storage device 20.

This read command is a plurality of read commands which are obtained by dividing LBAs from a head LBA to a last LBA by a data transfer amount (for example, 1024 byte unit) which can be processed into the first storage device 20, and the plurality of read commands are issued in the order of addresses.

The command processing unit 41a of the first storage device 20 receives the plurality of read commands in sequence and instructs the drive control unit 45a to output a read request to a storage drive 27, which is a read target, of the first storage drive group 28. Then, the command processing unit 41a outputs the read data read from the storage drive 27 which is the read target, to the second storage device 30 via the channel adapter 22.

The second storage device 30 sequentially receives the read data from the first storage device 20 and temporarily stores the read data in the cache memory 35 in the read-out order of addresses (LBA order). Then, the read data stored in the cache memory 35 is outputted to the second storage drive group 38 by the drive control unit 45b so as to be stored in each of the storage drives 37.

When copying of all data is completed through the above-described process, the copy processing execution unit 42 instructs the command processing unit 41b to output a completion report of the copy processing to the server device 2 (7). Then, the copy processing execution unit 42 instructs the mode setting unit 43 to cancel the copy processing mode of the second storage device 30 and set the mode flag 34b to the normal processing mode (8).

When the copy control unit 13 of the server device 2 receives the completion report of the copy processing from the second storage device 30, the copy control unit 13 instructs the mode setting unit 14 to cancel the copy processing mode of the server device 2 and set the mode flag 15 to the normal processing mode (9).

Then, the copy control unit 13 instructs the connection device recognition unit 11 to cut off interface connection of the first storage device 20 which is the copy source. Accordingly, the first storage device 20 which is the copy source is separated from the server device 2.

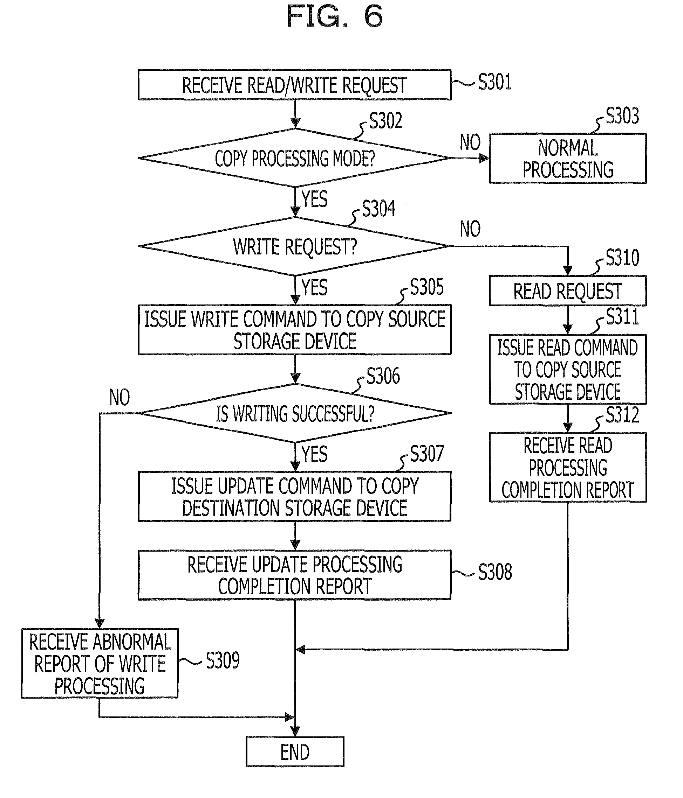

FIG. 6 is a flow diagram illustrating read/write control in a copy processing mode. When the application execution unit 12 of the server device 2 receives a read/write request which is inputted by a user (S301), the application execution unit 12 refers to the mode flag 15 so as to determine whether the mode flag 15 is in the copy processing mode or not (S302). When the mode flag 15 is not in the copy processing mode (S302, No), the mode flag 15 is in the normal processing mode, and the application execution unit 12 performs normal command processing (S303).

When the mode flag 15 is in the copy processing mode (S302, Yes), the copy control unit 13 determines whether the request is a write request or not (S304). When the inputted request is the write request (S304, Yes), the copy control unit 13 instructs the command issuing unit 16 to issue a write command to the first storage device 20 which is the copy source (S305).

By this write command, the copy control unit 13 makes the first storage device 20 execute write processing with respect to a write target area (one or a plurality of addresses). When the write processing is successful (S306, Yes), the copy control unit 13 receives a completion report from the first storage device 20.

Then, the copy control unit 13 instructs the command issuing unit 16 to issue an update command to the second storage device 30 which is the copy destination (S307). By this update command, the copy control unit 13 makes the second storage device 30 execute update processing of data of an update target area (one or a plurality of addresses) which corresponds to the write target area (one or a plurality of addresses). When the write processing is not successful (S306, No), the copy control unit 13 receives an abnormal report from the first storage device 20 (S309).

The update command is a command for replacing copied data, which corresponds to the write target area, of the second storage device 30 with write data. The second storage device 30 can grasp that data of the write target area of the first storage device 20 is rewritten, by this update command.

The copy control unit 13 receives a completion report of the update processing from the second storage device 30 (S308). Thus, the write control in the copy processing mode is executed.

When the inputted request is not the write request (S304, No), the copy control unit 13 determines that the inputted request is a read request (S310). Then, the copy control unit 13 instructs the command issuing unit 16 to issue a read command to the first storage device 20 which is the copy source (S311).

By this read command, the copy control unit 13 makes the first storage device 20 execute read processing with respect to a read target area (one or a plurality of addresses). Subsequently, the copy control unit 13 receives a completion report of the read processing from the first storage device 20 (S312). Thus, the read processing in the copy processing mode is executed.

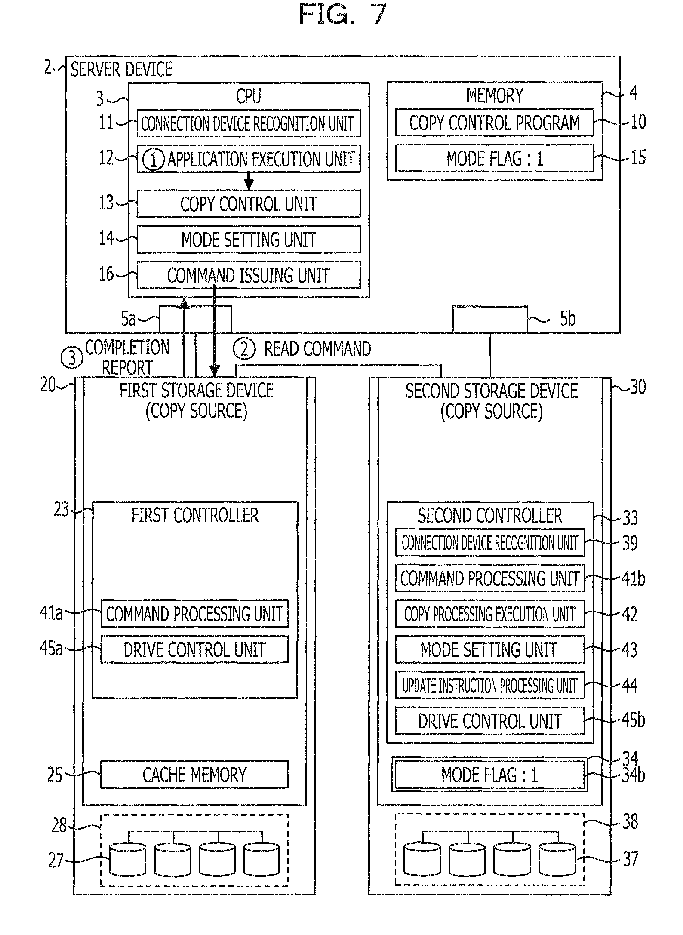

FIG. 7 illustrates the read processing in the data copy processing system. The copy control unit 13 receives a read request from the application execution unit 12 (1). Then, the copy control unit 13 instructs the command issuing unit 16 to issue a read command to the first storage device 20 which is the copy source (2).

The first storage device 20 receives the read command from the server device 2. At this time, the first storage device 20 receives and processes a read command from the second storage device 30 as well. In a case where read data which is read from a read target address is stored in the cache memory 25, the command processing unit 41a reads the read data from the cache memory 25. Then, the command processing unit 41a outputs the read data to the server device 2.

In a case where read data is not stored in the cache memory 25, the command processing unit 41a instructs the drive control unit 45a to read data from a storage drive 27, which is a target, of the first storage drive group 28. Then, the command processing unit 41a outputs the read data to the server device 2.

The first storage device 20 instructs the command processing unit 41a to output a completion report of the read processing to the server device 2 (3). Thus, the read processing can be executed in response to a read request from an application even during copy processing in the data copy processing system.

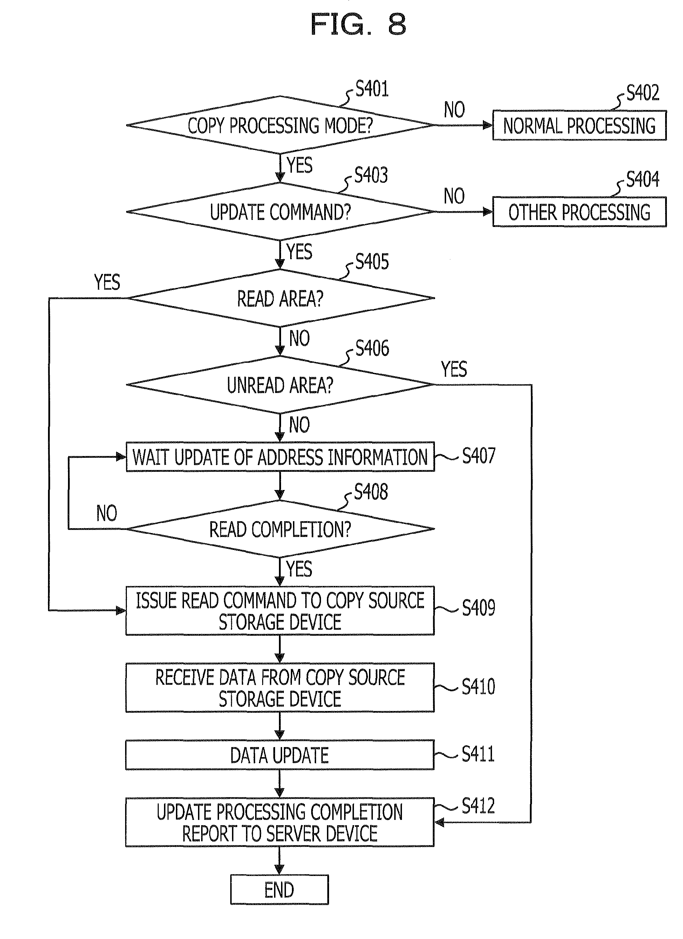

FIG. 8 is a flow diagram illustrating the update processing of the second storage device. When the second storage device 30 receives a command from the server device 2, the command processing unit 41b refers to the mode flag 34b so as to determine whether the mode flag 34b is in the copy processing mode or not (S401).

When the mode flag 34b is not in the copy processing mode (S401, No), the mode flag 34b is in the normal processing mode, and the command processing unit 41b performs normal command processing (S402). When the mode flag 34b is in the copy processing mode (S401, Yes), the copy processing execution unit 42 determines whether the received command is an update command or not (S403).

When the command is not the update command (S403, No), the copy processing execution unit 42 executes other processing (S404). When the command is the update command (S403, Yes), the update command processing unit 44 determines whether an update target area which is designated by the update command is included in a data-acquired (read) area in which data is acquired from the first storage device 20 (S405).

When the update target area is included in the read area (S405, Yes), the update command processing unit 44 instructs the command processing unit 41b to issue a read command to the first storage device 20 which is the copy source (S409). When the update target area is not included in the read area (S405, No), the update command processing unit 44 determines whether the update target area is included in an unread area or not (S406).

When the update target area is included in the unread area (S406, Yes), the update command processing unit 44 instructs the command processing unit 41b to output a completion report of the update processing to the server device 2 because the update processing does not have to be performed (S412).

When the update target area is not included in the unread area (S406, No), the reading is currently performed and the update command processing unit 44 waits update of address information (LBA) of a read address information pointer which is administrated by the copy processing execution unit 42 (S407).

The update command processing unit 44 makes the first storage device 20 execute read processing of the update target area, by the read command. Subsequently, the second storage device 30 receives read data of the update target area from the first storage device 20 (S410).

Then, the update command processing unit 44 performs the update processing of copied data by using this read command (S411). When the update processing is completed, the update command processing unit 44 instructs the command processing unit 41b to output a completion report of the update processing to the server device 2 (S412). Accordingly, data which is copied to the second storage device 30 can be updated with write data in a manner to correspond to write processing during the copy processing.

Here, the read area is an area in which data has been already acquired from the first storage device 20 in accordance with a read command for the copy processing. The unread area is an area in which data has not been acquired yet from the first storage device 20, that is, an area in which the read processing by the first storage device has not been completed. An area which is neither the read area nor the unread area is an area during reading in which the read processing is currently performed by the first storage device.

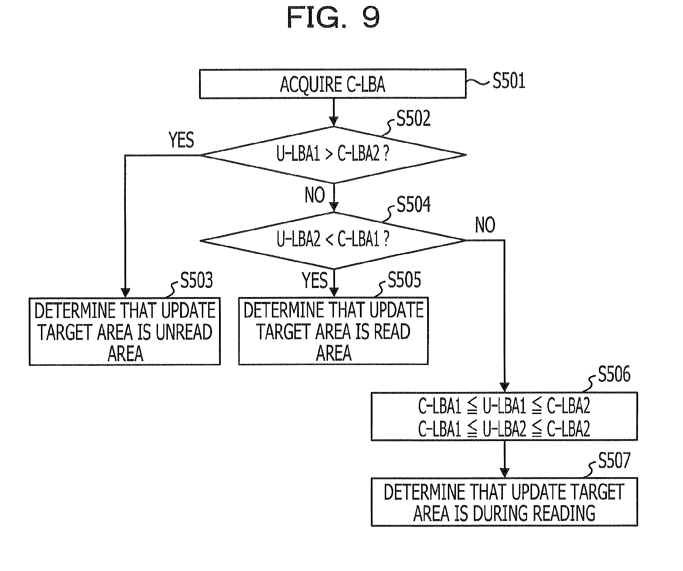

FIG. 9 is a flow diagram illustrating determination of whether to perform update processing of an update target area. The update command processing unit 44 determines whether data has been already acquired (read) or not from the first storage device 20 in an update target area. U-LBA1 is a head logical block address of the update target area. U-LAB2 is a last logical block address of the update target area.

The update command processing unit 44 acquires an address of an area in which reading is currently performed, from address (LBA) information of an address information pointer of an address which has been already read by data copy processing (S501).

An area during reading is an area during read data acquisition processing according to a read command which is issued by the copy processing execution unit 42, at the determination. C-LBA1 is a head logical block address of an area during reading. C-LBA2 is a last logical block address of the area during reading.

When U-LBA1 is larger than C-LBA2 (S502, Yes), it is determined that the update target area is an unread area (S503). Thus, reading (copying) has not been performed, so that the update command processing unit 44 determines not to perform update processing.

When U-LBA2 is smaller than C-LBA1 (S504, Yes), it is determined that the update target area is a read area (S505). Thus, reading has already been performed (copying has already been performed), so that the update command processing unit 44 determines to perform the update processing.

In other case (S504, No), that is, when C-LBA1≤U-LBA1≤C-LBA2 or C-LBA1≤U-LBA2≤C-LBA2 is satisfied (S506), it is determined that an update target address (U-LBA) is currently during reading (S507). Accordingly, the update command processing unit 44 determines to perform the update processing after the read processing of an area during reading is completed.

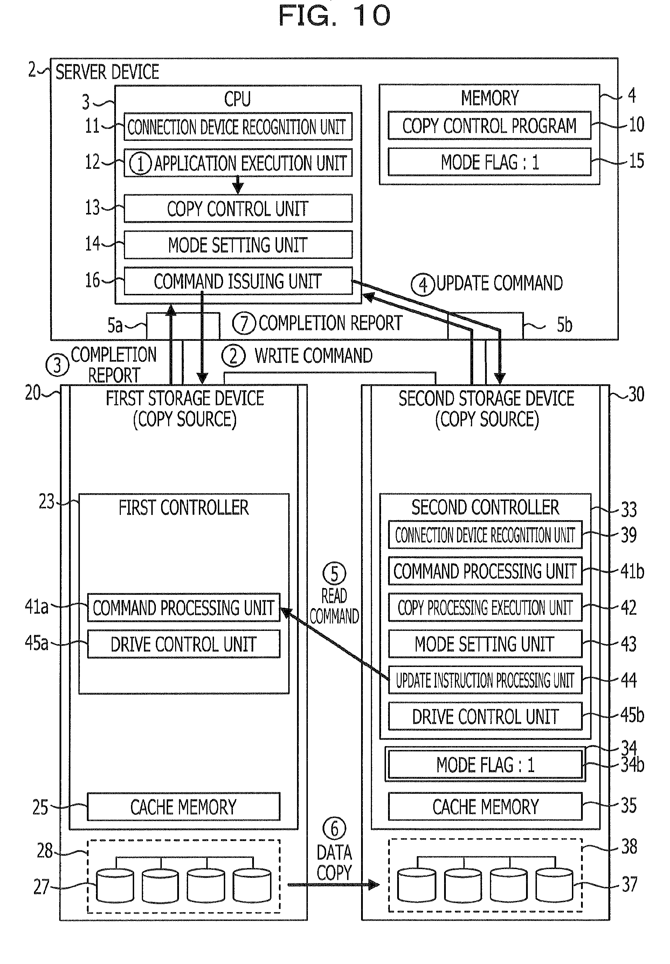

FIG. 10 illustrates write processing and update processing in the data copy processing system. The copy control unit 13 receives a write request from the application execution unit 12 (1). Then, the copy control unit 13 instructs the command issuing unit 16 to issue a write command to the first storage device 20 which is the copy source (2).

The first storage device 20 receives the write command from the server device 2. At this time, the first storage device 20 receives and processes a read command from the second storage device 30 as well. In a case where data which is read from a write target address is stored in the cache memory 25, the command processing unit 41a rewrites the write data of the cache memory 25.

In a case where data which is read from the write target address is not stored in the cache memory 25, the command processing unit 41a instructs the drive control unit 45a to write the write data in a storage drive 27 which is a write target. The first storage device 20 instructs the command processing unit 41a to output a completion report of the write processing to the server device 2 (3).

When the write command is normally ended, the copy control unit 13 instructs the command issuing unit 16 to issue an update command to the second storage device 30 which is the copy destination (4). Here, when the write command is abnormally ended, the server device 2 does not issue an update command.

When the update command processing unit 44 of the second storage device 30 receives the update command from the server device 2, the update command processing unit 44 determines whether data has been already acquired (read) or not in an update target area from the first storage device 20, as described in FIG. 9.

In a case where data has already been read or is currently being read in the update target area, the update command processing unit 44 instructs the command processing unit 41b to issue a read command to the first storage device 20 which is the copy source, so as to execute the update processing (5). In a case where data has not been read, the update processing is not performed because update does not have to be performed.

In a case where data of an address which is designated by the read command from the update command processing unit 44 is stored in the cache memory 25, the first storage device 20 reads the data from the cache memory 25 so as to output the data to the second storage device 30.

In a case where the data is not stored in the cache memory 25, the first storage device 20 reads the data from a storage drive 27, which is a target, of the first storage drive group 28 so as to output the data to the second storage device 30. Then, the update command processing unit 44 performs the update processing of copied data by using the read data which is read out (6).

When the update processing is completed, the update command processing unit 44 instructs the command processing unit 41b to output a completion report of the update processing to the server device 2 (7). Thus, the write processing can be executed in response to a write request from an application even during copy processing in the data copy processing system.

As described above, data copying (data transfer) can be performed by the server device 2 and a copy destination storage device irrespective of a specification of a copy source storage device. Further, the copy destination storage device reads out data from the copy source storage device in an order of addresses by using a read command of an interface specification of a related art such as a fiber channel, so that complicated setting and program are not demanded and copy processing can be simply performed.

Further, the data copying is performed in the order of addresses, so that copy progress can be easily administrated. Therefore, even though write processing corresponding to a write command is executed during the copy processing, demand of data update of the copy destination storage device can be easily judged.

Therefore, the copy source storage device can process a read/write command from the server device 2 even during the copy processing. Accordingly, the data copy processing system of the embodiment can execute the data copy processing of the storage device during operation.

## Claims

1. A data copy processing system comprising:
a first storage device that is a copy source and includes a first storage drive in which the data is recorded and a first controller that controls the first storage drive; and
a second storage device that is a copy destination and includes a second storage drive in which a copy of the data of the first storage device is written and a second controller that controls the second storage drive,
wherein the first controller performs control of instructing the first storage drive to read out all data in an order of addresses, in accordance with a read command that is issued from the second controller, and outputting the read-out data to the second storage device, and
the second controller performs control of writing the read-out data in the second storage drive in a read-out order of addresses.

2. The data copy processing system according to claim 1, wherein
when the first storage device receives a write command from a host device during execution of data copy processing, the first controller writes write data in an area that is designated by the write command, and
when data of the area that is designated by the write command has already been copied, the second controller performs update processing in which the second controller issues a read command to the first storage device to acquire the write data and updates copied data of an update target area with the write data.

3. The data copy processing system according to claim 2, wherein the second controller executes update processing with respect to the update target area on the basis of a result of comparison between an address of an area during data reading from the first storage device in accordance with the read command and an address of the update target area.

4. The data copy processing system according to claims 2 or 3, wherein when writing of data with respect to the area that is designated by the write command is successful, the second controller executes update processing with respect to the update target area.

5. The data copy processing system according to any one of claims 2 to 4, wherein
the second controller performs the update processing in accordance with an update command from the host device, and
when writing of data with respect to the area that is designated by the write command is successful, the host device issues the update command to the second storage device.

6. The data copy processing system according to any of the preceding claims, wherein when the first storage device receives a read command from the host device during execution of data copy processing, the first controller performs read processing to read out data from an area that is designated by the read command.

7. A storage device that copies data of a copy source storage device, comprising:
a hardware interface configured to perform communication with the copy source storage device;
a storage drive in which a copy of the data is written; and
a controller configured to perform control of issuing a read command to the copy source storage device via the hardware interface, making the copy source storage device read out all data in an order of addresses, and writing the read-out data in the storage drive in a read-out order of addresses.

8. A data copy processing method in which data written in a first storage device that is a copy source is copied to a second storage device that is a copy destination, comprising:
a first process in which a second controller of the second storage device issues a read command to the first storage device to read out all data from the first storage device in an order of addresses;
a second process in which a first controller of the first storage device instructs a first storage drive to read out all data in the order of addresses in accordance with the read command and outputs the read-out data to the second storage device; and
a third process in which the second controller of the second storage device writes the read-out data in a second storage drive in the second storage device in a read-out order of addresses.

9. The data copy processing method according to claim 8, wherein the first process includes a process in which the second storage device receives a copy command from a host device and a process in which the second controller issues the read command to the first storage device in accordance with the copy command.

10. The data copy processing method according to claims 8 or 9, the data copy processing method further comprising:
a fourth process in which when the first storage device receives a write command from the host device during execution of data copy processing, the first controller writes write data in an area that is designated by the write command; and
a fifth process in which when the data of the area that is designated by the write command has already been copied, the second controller performs update processing in which the second controller issues a read command to the first storage device to acquire the write data and updates copied data of an update target area with the write data.

11. The data copy processing method according to claim 10, wherein the fifth process includes a process in which the second controller executes update processing with respect to the update target area on the basis of a result of comparison between an address of an area during data reading from the first storage device in accordance with the read command and an address of the update target area.

12. The data copy processing method according to claims 10 or 11, wherein the fifth process includes a process in which when writing of data with respect to the area that is designated by the write command is successful, the second controller executes update processing with respect to the update target area.

13. The data copy processing method according to any one of claims 10 to 12, wherein the fifth process includes a process in which the second controller performs the update processing in accordance with an update command from the host device, and when writing of data with respect to the area that is designated by the write command is successful, the host device issues the update command to the second storage device.

14. The data copy processing method according to any one of claims 8 to 13, the data copy processing method further comprising:
a sixth process in which when the first storage device receives a read command from the host device during execution of data copy processing, the first controller performs read processing to read out data from an area that is designated by the read command.
